Europäisches Patentamt

European Patent Office

Office européen des brevets

(19)

(11) Numéro de publication: **0 133 086**
**B1**

(12) ## FASCICULE DE BREVET EUROPEEN

(45) Date de publication du fascicule du brevet:
**28.01.87**

(51) Int. Cl.⁴: **E 21 B 23/00,** E 21 B 23/04

(21) Numéro de dépôt: **84401426.6**

(22) Date de dépôt: **03.07.84**

(54) Dispositif d'ancrage d'une sonde dans un puits, par ouverture de bras mobiles.

(30) Priorité: **06.07.83 FR 8311383**

(43) Date de publication de la demande:
**13.02.85 Bulletin 85/7**

(45) Mention de la délivrance du brevet:
**28.01.87 Bulletin 87/5**

(84) Etats contractants désignés:
**DE GB IT NL**

(56) Documents cités:
**FR - A - 2 052 062**
**FR - A - 2 138 335**
**FR - A - 2 365 686**
**FR - A - 2 501 380**
**US - A - 2 490 350**
**US - A - 4 365 668**

(73) Titulaire: **INSTITUT FRANCAIS DU PETROLE, 4, Avenue de Bois-Préau, F-92502 Rueil-Malmaison (FR)**

(72) Inventeur: **Laurent, Jean, 5, rue du Moulle Morainvilliers, F-78630 Orgeval (FR)**
Inventeur: **Fabre, André, 17, rue des Tennerolles, F-92210 Saint-Cloud (FR)**

(74) Mandataire: **Kermarrec, Michelle et al, Institut Français du Pétrole 4, avenue de Bois-Préau, F-92502 Rueil Malmaison (FR)**

ACTORUM AG

## Description

La présente invention a pour objet un dispositif d'ancrage d'une sonde descendue dans un puits, par ouverture de bras mobiles venant s'appuyer sur la paroi de celui-ci.

Plus particulièrement, l'invention concerne un dispositif d'ancrage par ouverture de bras mobiles, d'une sonde équipée d'un appareillage de mesure que l'on descend dans un puits pour l'étude des formations géologiques rencontrées ou pour réaliser des opérations de prospection sismique, cette sonde étant fixée à l'extrémité d'un câble multi-fonctions contenant des fils électriques et des lignes de transmission de signaux entre l'appareillage de mesure et une installation de surface.

Les systèmes permettant l'ancrage de dispositif descendus dans des trous ou des puits forés dans le sol à l'extrémité d'un câble, comportent généralement un ou plusieurs bras pivotants associés à des moyens moteurs. Ces moyens peuvent comporter par exemple des vérins hydrauliques pour actionner les bras, ces vérins communiquant par un circuit hydraulique avec un cylindre dans lequel coulisse de manière étanche un piston déplaçable au moyen d'un moteur électrique par exemple. Un tel dispositif est décrit par exemple dans FR-A-2 501 380.

Les moyens moteurs peuvent être constitués aussi par des ressorts adaptés, en se détendant, à écarter les bras d'ancrage, le mouvement d'extension des ressorts étant contrarié par des éléments mécaniques déplaçables sous l'action d'un système hydraulique contenu dans le corps de la sonde et actionné depuis l'installation de surface. Des dispositifs a utilisant la combinaison de ressorts et d'un système hydraulique, sont par exemple décrits dans FR-A-2 052 062 et 2 138 335.

Le dispositif d'ancrage selon l'invention comporte au moins un ressort, une tige entraînée en translation par la détente du ressort, des moyens pour transformer le mouvement de translation de la tige en un mouvement de pivotement du bras d'ancrage et des moyens d'immobilisation par intermittence de la tige en position de compression du ressort. Il est caractérisé en ce que les moyens d'immobilisation comportent un verrou adapté à venir s'engager dans un évidement radial de la tige en position de compression du ressort et des moyens hydrauliques pour déplacer le verrou.

Les moyens hydrauliques peuvent comporter une cavité ménagée dans le corps de l'appareil, une tête solidaire du verrou en translation et adaptée à coulisser dans la cavité, et un circuit hydraulique pour appliquer par intermittence des pressions inégales sur les deux faces opposées de la tête, l'une des deux pressions étant égale à la pression régnant dans le puits à la profondeur choisie où l'appareil est immobilisé. L'application des deux pressions inégales est effectuée par exemple au moyens d'une électro-vanne.

Le dispositif étant le plus souvent utilisé à une profondeur de plusieurs centaines de mètres de profondeur où la pression est importante, la force à laquelle est soumis le verrou du fait de la pression différentielle appliquée au piston est considérable et permet un déclenchement très sûr et très franc de l'ouverture du bras.

De plus, cette force de déclenchement importante est obtenue sans recourir à un générateur autonome de fluide sous pression entraîné par un moteur électrique nécessitant une alimentation électrique importante.

Le système de commande étant essentiellement constitué d'une électro-vanne, l'alimentation électrique de la sonde est simplifiée.

Il faut souligner également que la force d'écartement du bras, qui est liée à une surpression prenant naissance uniquement au cours de la descente de l'appareil dans le puits, est nulle en surface et qu'un déclenchement accidentel de bras après compression du ressort et verrouillage est impossible tant que l'appareil ne se trouve pas dans ses conditions normales d'utilisation.

D'autres caractéristiques et avantages du dispositif selon l'invention apparaîtront à la lecture de la description d'un mode de réalisation préféré mais non limitatif et en se référant aux dessins annexés sur lesquels:

la figure 1 montre une vue partielle de l'appareil montrant le dispositif d'ancrage en position de fermeture et de verrouillage du bras pivotant, la partie supérieure de la sonde et le câble multi-fonctions qui la supporte n'étant pas représentés,

la figure 2 montre la même vue partielle de l'appareil où le dispositif d'ancrage est représenté en position déclenchée.

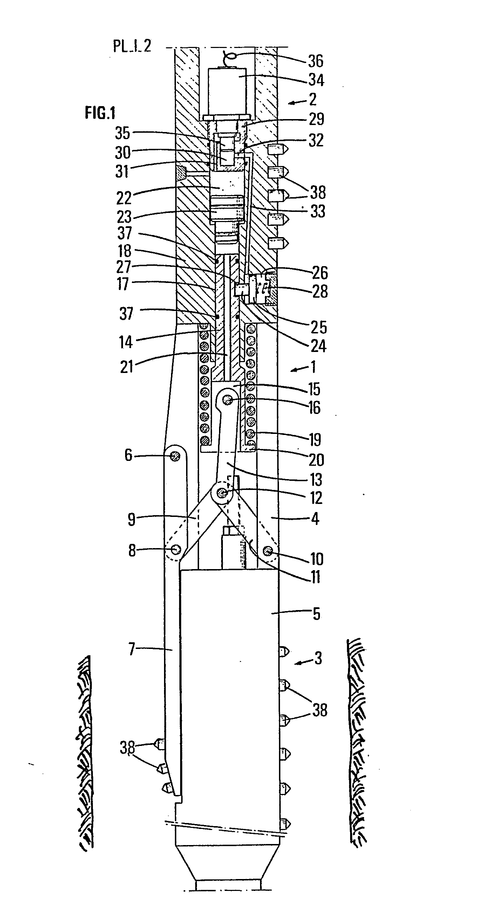

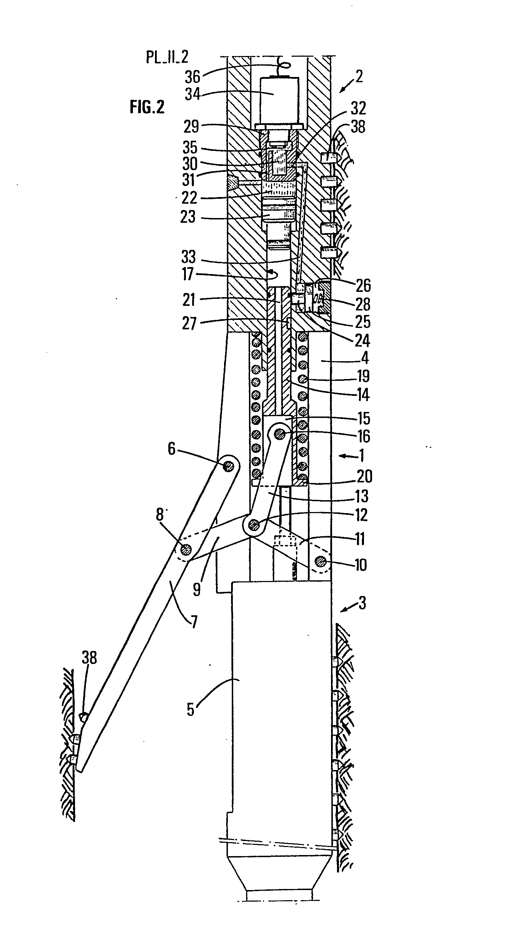

Le dispositif d'ancrage représenté aux figures 1 et 2 est associé à une bande tubulaire 1 comportant une partie supérieure 2 et une partie inférieure 3 rendues solidaires l'une de l'autre par plusieurs barres 4.

L'appareillage de mesure, constitué de géophones par exemple, est contenu dans un compartiment 5 de la partie inférieure 3 de la sonde et relié au câble multi-fonctions supportant la sonde par des conducteurs électriques (non représentés) passant par exemple à l'intérieur des barres 4.

Une des barres 4 comporte un axe 6 autour duquel peut pivoter un bras d'ancrage 7. Sur un axe 8 fixé au bras d'ancrage 7 à une certaine distance de l'axe 6, vient s'articuler une première extrémité d'un premier bras de manœuvre 9. Sur un axe 10 solidaire d'une autre barre 4 vient s'articuler une première extrémité d'un second bras de manœuvre 11. Les secondes extrémités de deux bras de manœuvre 9, 11 peuvent pivoter par rapport à un axe commun 12. Sur cet axe commun peut également pivoter une première extrémité d'un troisième bras de manœuvre 13.

Le dispositif d'ancrage comporte également une tige 14 pourvue d'un évidement 15 au fond duquel est fixé un axe d'articulation 16 pour la seconde extrémité du troisième bras de manœuvre 13. La tige 14 peut coulisser dans un logement cylindrique de guidage 17 ménagé dans l'axe du corps 18 de la sonde.

Un ressort hélicoïdal 19 s'appuyant à une première extrémité sur le corps de la sonde et à une seconde extrémité sur un épaulement 20 de la tige 14, exerce sur celle-ci une force tendant à la faire sortir de son logement de guidage 17. Un canal 21 traversant la tige 14 suivant son axe, permet de mettre la partie supérieure du logement de guidage 17 à la même pression que celle régnant à l'extérieur de la sonde 1.

La partie supérieure du logement 17 est prolongée par une chambre 22 de section supérieure contenant un liquide hydraulique. Un piston 23 est adapté à coulisser de manière étanche dans la chambre 22 et la partie supérieure du logement de guidage 17, sous l'action de la différence de pression éventuelle entre la pression du liquide hydraulique et celle régnant dans le puits, de manière à annuler cette différence de pression.

Le dispositif comporte encore un verrou 24 pourvu d'une tête 25 de plus grande section déplaçable à l'intérieur d'une cavité cylindrique 26 ménagée radialement dans le corps 18 de la sonde, entre une position de retrait où le verrou est rétracté entièrement à l'intérieur dudit corps et une position avancée où il saillie à l'intérieur du logement de guidage 17. Un évidement 27 est ménagé radialement dans la tige 14 pour le verrou 24. Le verrou 24 est poussé vers sa position avancée par un ressort 28 placé dans la cavité 26 et appuyant sur la tête 25.

Les dimensions des bras de manœuvre et l'emplacement des axes d'articulations 8, 10, 12 et du lgement 17, sont choisis de manière que, lorsque le bras d'ancrage 7 est en position de fermeture le long du corps de la sonde, le ressort hélicoïdal 19 soit bandé et le verrou 24 soit dans l'évidement 27.

L'extrémité de la chambre 22 opposée au logement de guidage 17 est fermée par un bouchon fileté 29 pourvu d'une cavité axiale 30 communiquant avec l'intérieur de la chambre 22 par un canal 31, et avec la cavité 26 par un second canal 32 et un canal 33 ménagé à l'intérieur du corps 18 de la sonde, qui débouche dans la cavité 26 du côté de celle-ci le plus proche du logement de guidage 17.

A la partie supérieure du bouchon fileté 29 est fixé une électro-vanne 34 agissant sur un piston 35 adapté à coulisser de manière étanche dans la cavité axiale 30 entre une position d'enforcement où les canaux 31 et 32 sont isolés l'un de l'autre, et une position de retrait où ces mêmes canaux communiquent.

Des fils conducteurs 36 connectés dans la partie supérieure non représentée de la sonde, à un câble multi-fonctions qui relie celle-ci à l'installation de surface, permettent d'actionner l'électro-vanne et ainsi de déplacer à volonté le piston 35 vers sa position de retrait ou sa position d'enforcement. Des joints d'étanchéité 37 sont disposés à la périphérie de la tige 14 pour isoler de manière étanche le verrou 24 du logement de guidage 17 et de l'extérieur de la sonde.

Des éléments saillants 38 sont fixés à l'extrémité du bras d'ancrage 7 et sur la paroi de la sonde 1 qui lui est opposée, de manière à améliorer le couplage lorsque ledit bras 7 et ladite paroi sont en contact avec les parois du puits.

Suivant un exemple de réalisation, la pression nécessaire pour le déclenchement du bras 7 est de 25 bars à une profondeur de 250 mètres.

Le dispositif fonctionne de la manière suivante:

La sonde 1 se trouvant en surface, le bras d'ancrage 7 est en position fermée contre la paroi du corps (figure 1), le ressort hélicoïdal 19 est comprimé par le retrait de la tige 14 à l'intérieur de son logement de guidage 17 et le verrou 24 est poussé par le ressort 28 hors de sa cavité et vient se bloquer dans l'évidement 27 de la tige 14. L'électro-vanne 34 est actionnée pour amener le piston 35 dans sa position de retrait (représentée à la figure 2) de manière que les pressions de part et d'autre de la tête 25 du verrou 24 soient identiques et égales à la pression atmosphérique extérieure, puis le piston 35 est ramené en postion avancée (figure 1) de manière à isoler, du milieu extérieur, l'intérieur de la cavité axiale 30 du bouchon 29.

La sonde 1 est alors descendue dans le puits. Au fur et à mesure de sa descente, la pression extérieure croît. Le recul du piston libre 23 à l'intérieur de la chambre 22 sous l'action de cette pression qui lui est appliquée par le canal axial 21, permet d'égaliser à chaque instant la pression du liquide hydraulique contenu dans la chambre 22 avec celle régnant dans le puits.

Lorsque la sonde est parvenue à la profondeur choisie où elle doit être ancrée, on actionne l'électro-vanne 34 de manière que le piston 35 recule (figure 2) et mette en communication les canaux 31 et 32, 33. La pression du liquide hydraulique, qui, du fait du piston libre 22, est égale à la pression extérieure à la sonde, est appliquée à la tête 25 du verrou 24 et celui-ci est chassé vers sa position de retrait (figure 2). La tige 14 se trouve libérée et, sous l'action du ressort hélicoïdal 19, est poussée vers l'extérieur de son logement de guidage 17. Le pivotement des bras de manœuvre 9, 11, 13 résultant de ce mouvement a pour de faire pivoter le bras d'ancrage 7 et, lorsqu'il vient en appui sur la paroi, de presser la sonde 1 contre la paroi opposée du puits. L'appareillage contenu dans la sonde peut alors être utilisé.

On ne sortirait pas du cadre de l'invention en utilisant le même système hydraulique pour commander le déverrouillage simultané de plusieurs bras d'ancrage tels que le bras 7.

**Revendications**

1. Dispositif d'ancrage pour l'immobilisation d'un appareil descendu dans un puits, par écartement d'au moins un bras d'ancrage (7) pouvant pivoter par rapport au corps (18) de l'appareil, comportant au moins un ressort (19), une tige (14) entraînée en translation par la détente du ressort, des moyens pour transformer le mouvement de translation de la tige en un mouvement de pivotement du bras d'ancrage et des moyens d'immobilisation par intermittence de la tige (14) en position de compression du ressort (19), caractérisé en ce que les moyens d'immobilisation comportent un verrou (24) adapté à venir s'engager dans un évidement radial (27) de la tige (14) en position de compression du ressort, et des moyens hydrauliques pour déplacer le verrou (24) et dégager la tige (14).

2. Dispositif d'ancrage selon la revendication 1, caractérisé en ce que les moyens hydrauliques comportent une cavité (26) ménagée dans le corps (18) de l'appareil, un tête (25) solidaire du verrou (24) en translation et adaptée à coulisser dans la cavité (26), et un circuit hydraulique pour appliquer par intermittence des pressions inégales sur les deux faces opposées de la tête (25), l'une des deux pressions étant égale à la pression régnant dans le puits à la profondeur choisie d'immobilisation de l'appareil.

3. Dispositif d'ancrage selon la revendication 2, caractérisé en ce que le circuit hydraulique comporte un canal (33) débouchant dans la cavité (26) du côté de celle-ci le plus proche de la tige (14) et une électrovanne (34) associée à un piston (35), pour mettre le canal (33) en communication avec une chambre (22) contenant un fluide et fermée à une extrémité par un piston libre (23) pouvant coulisser librement dans la chambre (27), ce piston (23) étant soumis sur sa face extérieure à la chambre, à la pression régnant dans le puits.

4. Dispositif d'ancrage selon la revendication 3, caractérisé en ce que la tige (14) comporte un canal axial (21) faisant communiquer la chambre avec l'extérieur de l'appareil et en ce que les moyens pour transformer le mouvement de translation de la tige (14) en un mouvement de pivotement du bras (7) comportent deux bras de manœuvre (9, 11) assujettis à l'une de leurs extrémités respectivement au bras d'ancrage et au corps (18) de l'appareil et à leur autre extrémité à un troisième bras de manœuvre (13) solidaire de la tige (14) en translation.

5. Dispositif selon la revendication 4, caractérisé en ce que le piston (35) associé à l'électro-vanne (34) est déplaçable dans une cavité axiale (30) ménagée dans une pièce (29) rapportée à l'extrémité de la chambre (22) opposée au canal (21), ce piston (35) étant déplaçable entre une position d'enfoncement où la cavité (26) ménagée dans le corps (18) de l'appareil pour la tête (25) du verrou (24) est isolée de la chambre (22) et une position de retrait où cette cavité (26) et la chambre (22) communiquent.

6. Dispositif selon la revendication 1, caractérisé en ce que le bras d'ancrage (7) et le corps (18) de l'appareil, du côté opposé au bras d'ancrage (7), comportent des éléments saillants (38) pour améliorer le couplage de l'appareil avec les parois du puits.

**Patentansprüche**

1. Verankerungsvorrichtung zum Unbeweglichmachen eines in ein Bohrloch abgesenkten Geräts durch Verspreizen wenigstens eines Verankerungsarms (7), der bezüglich des Körpers (18) des Geräts verschwenken kann, mit wenigstens einer Feder (19), einer translatorisch durch Entspannen der Feder mitgenommenen Stange (14), Einrichtungen zum Umformen der Translationsbewegung der Stange in eine Schwenkbewegung des Verankerungsarms sowie Einrichtungen, um intermittierend die Stange (14) in Kompressionsstellung der Feder (19) unbeweglich zu machen, dadurch gekennzeichnet, dass die Einrichtungen zum Unbeweglichmachen einen Bolzen bzw. Riegel (24) derartiger Ausbildung umfassen, dass er in Eingriff in eine Radialausnehmung (27) der Stange (14) in Kompressionsstellung der Feder kommt und hydraulische Einrichtungen aufweist, die den Bolzen oder Riegel (24) verschieben und die Stange (14) freigeben.

2. Verankerungsvorrichtung nach Anspruch 1, dadurch gekennzeichnet, dass die hydraulischen Einrichtungen eine Ausnehmung (26) umfassen, die im Gehäuse (18) der Vorrichtung ausgespart ist, einen fest mit dem Riegel oder Bolzen (24) verbundenen Kopf (25), der translatorisch fest ist und so ausgebildet ist, dass er in der Ausnehmung (26) gleitet sowie einen hydraulischen Kreis, um intermittierend ungleiche Drücke auf die gegenüberliegenden Seiten des Kopfes (25) auszuüben, wobei einer der beiden Drücke gleich dem Druck ist, der im Bohrloch auf der gewählten Festlegungstiefe des Geräts herrscht.

3. Verankerungsvorrichtung nach Anspruch 2, dadurch gekennzeichnet, dass der hydraulische Kreis einen Kanal (33) umfasst, der in dem Hohlraum (26) auf der stangenseitig (14) nächstliegenden Seite endet und ein einem Kolben (35) zugeordnetes Magnetventil (34) aufweist, um den Kanal (33) in Verbindung mit einer Kammer (22) zu setzen, die ein Fluid enthält und an einem Ende durch einen freien Kolben (23) geschlossen ist, der frei in der Kammer (22) gleitet, wobei der Kolben (23) auf seiner ausserhalb der Kammer befindlichen Fläche dem im Bohrloch herrschenden Druck ausgesetzt ist.

4. Verankerungsvorrichtung nach Anspruch 3, dadurch gekennzeichnet, dass die Stange (14) einen Axialkanal (21) aufweist, der die Kammer mit der Aussenseite der Vorrichtung in Verbindung setzt und dass die Einrichtungen zum Umformen der Translationsbewegung der Stange (14) in eine Schwenkbewegung des Arms (7) zwei Betätigungsaarme (9, 11) umfassen, die an einem ihrer Enden jeweils an dem Verankerungsarm und an dem Gehäuse (18) der Vorrichtung und an ihrem anderen Ende an einem dritten Betätigungsarm (13) befestigt sind, der translatorisch fest bezüglich der Stange (14) ist.

5. Vorrichtung nach Anspruch 4, dadurch gekennzeichnet, dass der dem Magnetventil (34) zugeordnete Kolben (35) in einem Axialhohlraum (30) verschiebbar ist, der in einem Bauteil (29) untegebracht ist, das an dem dem Kanal (21) abgelegenen Ende der Kammer (22) angesetzt ist, wobei der Kolben (35) verschiebbar ist zwischen einer eingefahrenen Stellung, wo der im Gehäuse (18) des Geräts ausgesparte Hohlraum (26) für den Kopf (25) des Riegels (24) von der Kammer (22) isoliert ist und einer rückgezogenen Stellung verschiebbar ist, in der dieser Hohlraum (26) und die Kammer (22) in Verbindung stehen.

6. Vorrichtung nach Anspruch 1, dadurch gekennzeichnet, dass der Verankerungsarm (7) und der Körper (18) des Geräts auf der dem Verankerungsarm (7) abgelegenen Seite vorspringende Elemente (38) umfassen, um die Kopplung der Vorrichtung mit den Wandungen des Bohrlochs zu verbessern.

**Claims**

1. Anchoring device for immobilizing an apparatus lowered into a well, by opening out at least one anchorage arm (7) able to pivot in relation to the body (18) of the apparatus and comprising at least one spring (19), a rod (14) driven in translation by the expansion of the spring, means for transforming the translational movement of the rod into a pivoting movement of the anchorage arm and means for intermittently immobilizing the rod (14) in the compression position of the spring (19), characterized in that the immobilization means comprises a bolt (24) adapted to be engaged in a radial recess (27) of the rod (14) in the compression position of the spring, and hydraulic means for moving the bolt (24) and releasing the rod (14).

2. Anchoring device according to claim 1, characterized in that the hydraulic means comprising a cavity (26) formed in the body (18) of the apparatus, a head (25) integral with the translation bolt (24) and adapted to slide into the cavity (26), and a hydraulic circuit to intermittently apply unequal pressures to the two opposite faces of the head (25), one of the two pressures being equal to the pressure existing in the well at the depth selected for immobilization of the equipment.

3. Anchoring device according to claim 2, characterized in that the hydraulic circuit comprises a channel (33) opening into the cavity (26) on the side thereof the nearest to the rod (14) and an electromagnetic-valve (34) associated with a piston (35), to place the channel (33) in communication with a chamber (22) containing a fluid and closed at one extremity by a free piston (23) freely slidable into the chamber (22), this piston (23) being subjected on its face outside the chamber to the pressure contained in the well.

4. Anchoring device according to claim 3, characterized in that the rod (14) comprises an axial channel (21) communicating the chamber to the exterior of the apparatus and in that means for transforming the translation movement of the rod (14) into a pivoting movement of the arm (7) comprise two operating arms (9, 11) secured at one of their ends respectively to the anchor arm and to the body (18) of the apparatus and at their other end to a third operating arm (13) integral with the rod (14) in translation.

5. Device according to claim 4, characterized in that the piston (35) connected to the electromagnetic-valve (34) is movable inside an axial cavity (30) formed in a part (29) attached to the extremity of the chamber (22) opposite the channel (21), this piston (35) being movable between a penetration position where the cavity (26) formed inside the body (18) of the apparatus for the head (25) of the bolt (24) is isolated from the chamber (22) and a retracted position where this cavity (26) and the chamber (22) are in communication.

6. Device according to claim 1, characterized in that the anchor arm (7) and the body (18) of the apparatus on the side opposite the anchorage arm (7), comprise projecting elements (38) to improve the coupling of the apparatus with the walls of the well.

FIG.1

0 133 086

PL_II_2

FIG.2

9